# EUROPÄISCHE PATENTANMELDUNG

(11) **EP 3 379 209 A1**
(43) Veröffentlichungstag der Anmeldung: **26.09.2018**
(21) Anmeldenummer: 18161201.1
(22) Anmeldetag: 12.03.2018
(51) Int. Cl.: G01F 1/84

(54) **DURCHFLUSSMESSGERÄT**

(30) Priorität: 24.03.2017 DE 102017010637
(71) Anmelder: Krohne AG, 4019 Basel (CH)
(72) Erfinder: Rolph, Christoper, Northants, NN72HA (GB); Wang, Tao, Rough Common, Canterburry, CT2 9DG (GB)
(74) Vertreter: Gesthuysen Patent- und Rechtsanwälte

(57) **Zusammenfassung**

Beschrieben und dargestellt ist ein Durchflussmessgerät (1) mit wenigstens einem Messrohr (4) und mit wenigstens einem Einlaufelement (7), wobei das Einlaufelement (7) mit dem wenigstens einen Messrohr (4) verbunden ist und in Strömungsrichtung vor dem wenigstens einen Messrohr (4) angeordnet ist. Die Aufgabe ein Durchflussmessgerät anzugeben, das auch für den Nachweis von erosiven Medien geeignet ist, wird dadurch gelöst, dass wenigstens ein Anströmelement (8) vorhanden ist, wobei das Anströmelement (8) zumindest teilweise innerhalb des Einlaufelements (7) angeordnet ist und wobei das Anströmelement (8) lösbar mit dem Einlaufelement (7) verbunden ist.

## Beschreibung

Die Erfindung geht aus von einem Durchflussmessgerät mit wenigstens einem Messrohr und mit wenigstens einem Einlaufelement, wobei das Einlaufelement mit dem wenigstens einen Messrohr verbunden ist und in Strömungsrichtung vor dem wenigstens einen Messrohr angeordnet ist.

Die Messung des Massedurchflusses eines durch ein Messrohr strömenden Mediums, insbesondere eines Fluids, mit einem Durchflussmessgerät, beispielsweise mit einem Coriolis-Massedurchflussmessgerät ist aus dem Stand der Technik bekannt. Ein Coriolis-Massedurchflussmessgerät weist wenigstens ein Messrohr, einen Schwingungserzeuger und zwei Schwingungsaufnehmer auf, wobei die Schwingungsaufnehmer in Längsrichtung beabstandet am einlaufseitigen und am auslaufseitigen Ende des Messrohrs angeordnet sind. Im Betrieb wird das von dem Medium durchströmte Messrohr von dem Schwingungserzeuger in Schwingung versetzt. Die Schwingungsaufnehmer messen die erzeugte Schwingung ein- und auslaufseitig am Messrohr. Auf Grund des Coriolis-Effektes stellt sich ein messbarer Phasenunterschied zwischen der einlaufseitigen und auslaufseitigen Schwingung ein. Dieser Phasenunterschied ist proportional zu dem Massestrom des Mediums.

Ebenfalls bekannt sind Coriolis-Massedurchflussmessgeräte, die mehr als ein Messrohr, beispielsweise zwei oder vier Messrohre aufweisen. Zur Messung des Durchflusses können alle Messrohre in Schwingung versetzt werden. Alternativ kann auch lediglich der Durchfluss durch ein Messrohr gemessen werden und auf Grund der bekannten Geometrie der einzelnen Messrohre kann der Gesamtdurchfluss bestimmt werden.

Daneben sind auch Durchflussmessgeräte bekannt, die andere Prinzipien zur Bestimmung des Massedurchflusses durch ein Messrohr ausnutzen.

Im Bereich der Anbindung des Durchflussmessgeräts an eine externe Rohrleitung weist ein Durchflussmessgerät ein Einlaufelement auf, das in das Messrohr oder in die Messrohre endet. Das Einlaufelement kann als Trichter ausgestaltet sein oder einen sprunghaften Übergang des Strömungsquerschnitts aufweisen und insofern eine Aufnahme für das Messrohr oder die Messrohre darstellen. Dabei kann das Einlaufelement als separates Bauteil beispielsweise mit dem Gehäuse des Durchflussmessgeräts fest, vorzugsweise unlösbar, verbunden sein oder einstückig beispielsweise mit dem Gehäuse ausgebildet sein. In jedem Fall ist es ein Teil des Durchflussmessgeräts. Da der Strömungsquerschnitt in diesem Bereich reduziert wird, ist dieser Anbindungsbereich besonders hohen Belastungen ausgesetzt. Insbesondere erosive Medien können die innere Oberflächen im Anbindungsbereich und insbesondere vorhandene Schweißnähte zwischen dem Einlaufelement und dem Messrohr oder den Messrohren schädigen.

Um dem Nachteil der Materialschädigung durch erosive Medien zu begegnen, ist es bekannt, zwischen den Flanschverbindungen eines einrohrigen Coriolis-Massedurchflussmessgeräts und einer externen Rohrleitung ein austauschbares Übergangselement vorzusehen, wobei das Übergangselement gleichzeitig eine Reduzierung des Strömungsquerschnitts aufweist. Bei Beschädigung oder Abnutzung der inneren Oberfläche des Übergangselementes kann dieses einfach ausgetauscht werden.

Ausgehend von diesem Stand der Technik ist es Aufgabe der Erfindung ein Durchflussmessgerät anzugeben, das auch für den Nachweis von erosiven Medien geeignet ist.

Erfindungsgemäß wird diese Aufgabe dadurch gelöst, dass wenigstens ein Anströmelement vorhanden ist, wobei das Anströmelement zumindest teilweise innerhalb des Einlaufelements angeordnet ist und wobei das Anströmelement lösbar mit dem Einlaufelement verbunden ist. Diese Ausgestaltung weist den Vorteil auf, dass das Anströmelement, wenn es auf Grund des Kontaktes mit einem erosiven Medium abgenutzt und/oder beschädigt ist, einfach ausgetauscht werden kann. Zudem ist das Anströmelement in den Aufbau des Durchflussmessgeräts integriert und schützt die innere Oberfläche des Einlaufelements und vorhandene Verbindungen zwischen dem Einlaufelement und dem wenigstens einen Messrohr. In vorteilhafter Weise kann so auf ein aus dem Stand der Technik bekanntes externes Bauteil, das im Messaufbau über eine weitere Verbindung integriert ist, verzichtet werden.

Gemäß einer vorteilhaften Ausgestaltung ist das Durchflussmessgerät ein Coriolis-Massedurchflussmessgerät mit wenigstens einem Schwingungserzeuger und mit wenigstens zwei Schwingungsaufnehmern. Besonders bevorzugt weist das Coriolis-Massedurchflussmessgerät zwei oder vier Messrohre auf.

Gemäß einer weiteren vorteilhaften Ausgestaltung ist das Anströmelement mittels einer kraft- oder formschlüssigen Verbindung mit dem Einlaufelement verbunden.

Besonders vorteilhaft ist es, wenn das Anströmelement mittels Schrauben oder Klemmen oder einer Klebeverbindung mit dem Einlaufelement verbunden ist.

Gemäß einer weiteren vorteilhaften Ausgestaltung besteht das Anströmelement zumindest teilweise aus einem Metall oder einem Polymer.

Gemäß einer nächsten Ausgestaltung weist das Durchflussmessgerät ein Flanschelement zur Anbindung an eine externe Rohrleitung auf, wobei das Anströmelement zumindest teilweise innerhalb des Flanschelements angeordnet ist. Auf diese Weise schützt das Anströmelement ebenfalls die innere, d.h. dem Medium zugewandte, Oberfläche des Flanschelements sowie evtl. vorhandene Verbindungsnähte zwischen dem Flanschelement und dem Einlaufelement.

Weiterhin ist es vorteilhaft, wenn ein Flanschelement zur Anbindung an eine externe Rohrleitung vorhanden ist, und wenn das Anströmelement zwischen dem Flanschelement und dem wenigstens einen Messrohr angeordnet ist.

Gemäß einer weiteren Ausgestaltung ist das Anströmelement als Strömungsquerschnittsreduzierer ausgestaltet. In dieser Ausgestaltung ist das Anströmelement besonders hohen Belastungen durch den Kontakt mit erosiven Medien ausgesetzt, da das Anströmelement unmittelbar durch das Medium angeströmt wird.

Gemäß einer alternativen Ausgestaltung weist das Durchflussmessgerät einen Strömungsquerschnittsreduzierer innerhalb des Einlaufelements auf, wobei das Anströmelement als Schutzschild auf dem Strömungsquerschnittsreduzierer angeordnet ist. Diese Ausgestaltung weist den Vorteil auf, dass der Strömungsquerschnittsreduzierer fest d.h. unlösbar mit dem Einlaufelement verbunden ist oder einteilig mit dem Einlaufelement ausgebildet ist und das als Schutzschild ausgestaltete Anströmelement auf dem Strömungsquerschnittsreduzierer angeordnet ist. Dabei kann das Anströmelement den Strömungsquerschnittsreduzierer vollständig bedecken, insbesondere derart, dass auch angrenzende Verbindungsnähte bedeckt werden. Alternativ kann das Anströmelement den Strömungsquerschnittsreduzierer teilweise, insbesondere an den Stellen, die besonders hohen Belastungen ausgesetzt sind, bedecken.

Eine weitere Ausgestaltung zeichnet sich dadurch aus, dass wenigstens zwei Messrohre vorhanden sind, und dass das Anströmelement als Strömungsteiler, der vorzugsweise innerhalb des Einlaufelements in Strömungsrichtung vor den Messrohren angeordnet ist, ausgestaltet ist.

Gemäß einer alternativen Ausgestaltung sind wenigstens zwei Messrohre und ein Strömungsteiler vorhanden, wobei der Strömungsteiler vorzugsweise in Strömungsrichtung vor den wenigstens zwei Messrohren innerhalb des Einlaufelements angeordnet ist und wobei das Anströmelement als Schutzschild auf dem Strömungsteiler angeordnet ist. Diese Ausgestaltung weist den Vorteil auf, dass der Schutzschild besonders flexibel ausgestaltet sein kann. Beispielsweise kann der Schutzschild den Strömungsteiler vollständig bedecken und insbesondere zusätzlich angrenzende Verbindungsnähte bedecken. Alternativ kann der Schutzschild lediglich die Bereiche des Strömungsteilers bedecken, die besonders hohen Belastungen ausgesetzt sind.

Gemäß einer weiteren Ausgestaltung weist das Durchflussmessgerät ein Flanschelement zur Anbindung an eine externe Rohrleitung auf, wobei der Schutzschild zumindest teilweise innerhalb des Flanschelementes angeordnet ist und so die innere Oberfläche, d.h. die dem Medium zugewandte Oberfläche des Flanschelementes schützt und wobei der Schutzschild einen Schutzschildflansch aufweist. Dieser Schutzschildflansch liegt dabei auf der Verbindungsfläche des Flanschelementes auf und ist damit im verbundenen Zustand zwischen dem Flanschelement des Durchflussmessgeräts und dem Flansch der externen Rohrleitung angeordnet.

Gemäß einer besonders bevorzugten Ausgestaltung weist der Schutzschild die Form eines Strömungsteilers oder eines Strömungsquerschnittsreduzierers auf. Im verbundenen Zustand schmiegt sich der Schutzschild an den integrierten Strömungsteiler oder Strömungsquerschnittsreduzierer des Durchflussmessgeräts optimal, d.h. passgenau, an.

Im Einzelnen gibt es nun eine Vielzahl von Möglichkeiten das erfindungsgemäße Durchflussmessgerät auszugestalten und weiterzubilden. Dazu wird verwiesen sowohl auf die dem unabhängigen Patentanspruch nachgeordneten Patentansprüche als auch auf die nachfolgende Beschreibung von bevorzugten Ausführungsbeispielen in Verbindung mit der Zeichnung. In der Zeichnung zeigen
- Fig. 1: ein Übergangselement aus dem Stand der Technik im eingebauten Zustand in Schnittdarstellung,
- Fig. 2: eine Schnittdarstellung eines ersten Ausführungsbeispiels eines Durchflussmessgeräts,
- Fig. 3a: eine Schnittdarstellung eines zweiten Ausführungsbeispiels eines Durchflussmessgeräts,
- Fig. 3b: eine Kombination aus Einlaufelement und Strömungsteiler in Explosionsdarstellung gemäß dem zweiten Ausführungsbeispiel,
- Fig. 4a: eine Schnittdarstellung eines dritten Ausführungsbeispiels eines Durchflussmessgeräts,
- Fig. 4b: eine Kombination aus Einlaufelement, Strömungsteiler und Schutzschild in Explosionsdarstellung gemäß dem dritten Ausführungsbeispiel und
- Fig. 5: ein viertes Ausführungsbeispiel eines Durchflussmessgeräts.

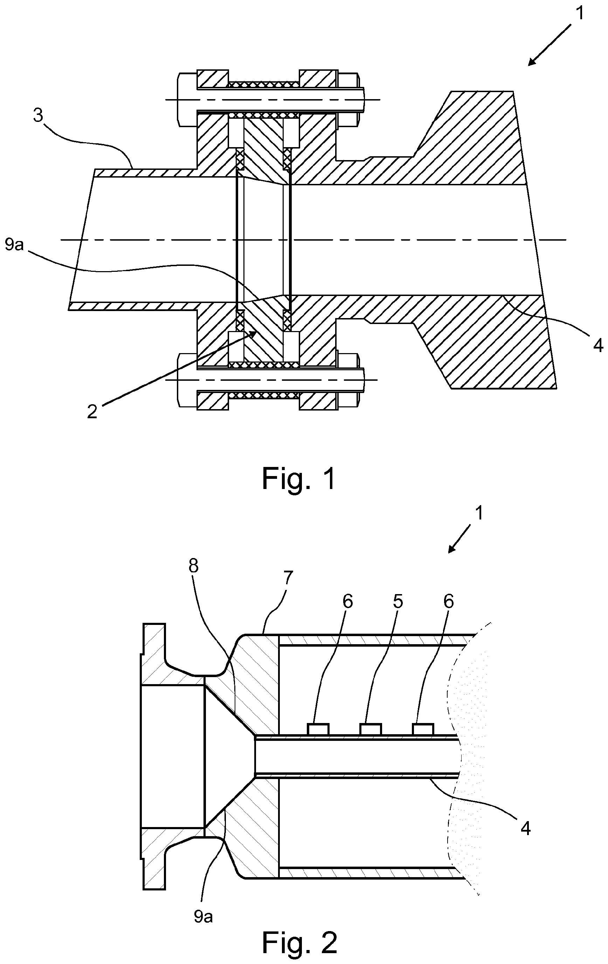

In Fig. 1 ist dargestellt eine Schnittansicht eines Endbereiches eines Coriolis-Massedurchflussmessgeräts 1, das über ein separates Übergangselement 2 mit einer externen Rohrleitung 3 verbunden ist. Das Übergangselement 2 umfasst einen Strömungsquerschnittsreduzierer 9a, mit dem der Strömungsquerschnitt der externen Rohrleitung 3 auf den Strömungsquerschnitt des Messrohrs 4 angepasst wird. Wird die Rohrleitung 3 und das Messrohr 4 von einem erosiven Medium durchflossen, so ist insbesondere das Übergangselement 2 einer hohen Belastung ausgesetzt, da das Übergangselement 2 unmittelbar durch das Medium angeströmt wird. Weist das Übergangselement 2 Abnutzungserscheinungen oder Beschädigungen auf, kann es einfach ausgetauscht werden.

Fig. 2 zeigt ein erstes Ausführungsbeispiel eines erfindungsgemäßen Durchflussmessgeräts 1, wobei das Durchflussmessgerät als Coriolis-Massedurchflussmessgerät umfassend ein Messrohr 4, einen Schwingungserzeuger 5 und zwei Schwingungsaufnehmer 6 zur Aufnahme der Schwingung des Messrohrs 4 im Betrieb, ausgestaltet ist. Zudem ist ein Einlaufelement 7 vorhanden, das mit dem Messrohr 4 durch eine Schweißverbindung verbunden ist. Darüber hinaus ist ein Anströmelement 8 vorhanden, das innerhalb des Einlaufelements 7 angeordnet ist, und das lösbar mit dem Einlaufelement 7 verbunden ist. Das Anströmelement 8 ist in dem dargestellten Ausführungsbeispiel als einfacher Strömungsquerschnittsreduzierer 9a zur Reduzierung des Strömungsquerschnitts auf den Querschnitt des Messrohrs 4 ausgestaltet. Auf Grund der lösbaren Anbindung kann das Anströmelement 8 besonders leicht ausgetauscht werden, wenn es beschädigt oder abgenutzt ist. Im Gegensatz zu der in Fig. 1 dargestellten Ausgestaltung aus dem Stand der Technik weist der in Fig. 2 gezeigte Messaufbau den Vorteil auf, dass das austauschbare Anströmelement 8 in den Aufbau des Coriolis-Massedurchflussmessgeräts 1 integriert ist und nicht als separates Übergangselement 2 im Messaufbau angeordnet ist.

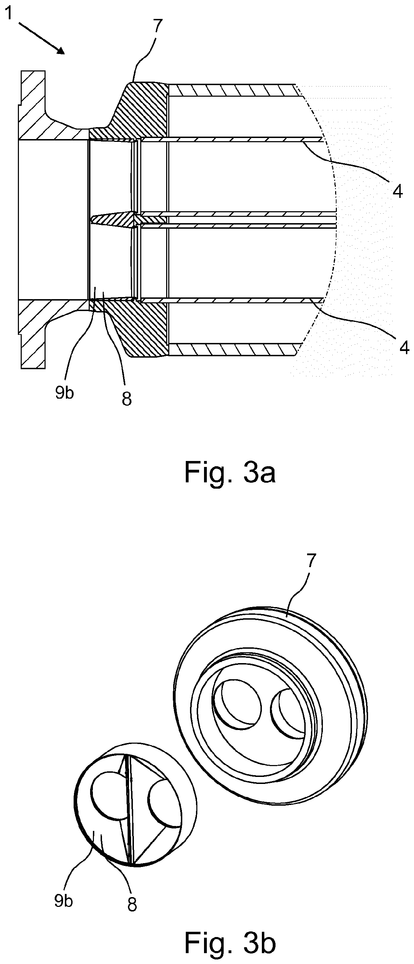

Fig. 3a zeigt in Schnittdarstellung den Endbereich eines zweites Ausführungsbeispiels eines Durchflussmessgeräts 1, das als Coriolis-Massedurchflussmessgerät 1 ausgestaltet ist. Das Coriolis-Massedurchflussmessgerät 1 weist zwei Messrohre 4, ein Einlaufelement 7, das mit den Messrohren 4 verbunden ist und einen Strömungsteiler 9b auf, der innerhalb des Einlaufelements 7 vor den Messrohren 4 angeordnet ist. Der Strömungsteiler 9b ist gleichzeitig als Anströmelement 8 ausgebildet, das lösbar mit dem Einlaufelement 7 verbunden ist. Fig. 3b zeigt die Kombination aus dem Einlaufelement 7 und dem als Anströmelement 8 ausgebildeten Strömungsteiler 9b in Explosionsdarstellung. Diese Ausgestaltung weist den Vorteil auf, dass das austauschbare Anströmelement 8 in den Aufbau des Coriolis-Massedurchflussmessgerätes 1 integriert ist.

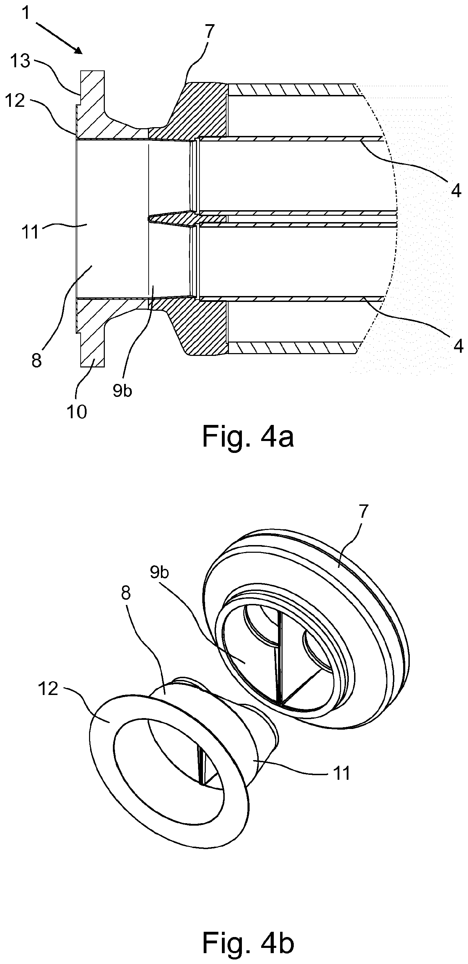

Fig. 4a zeigt in Schnittdarstellung den Endbereich eines dritten Ausführungsbeispiels eines Durchflussmessgeräts 1, das als Coriolis-Massedurchflussmessgerät 1 ausgestaltet ist. Das dargestellte Coriolis-Massedurchflussmessgerät 1 weist zwei Messrohre 4, ein Einlaufelement 7, das mit den Messrohren 4 verbunden ist und einen Strömungsteiler 9b auf. Mit dem Einlaufelement 7 ist ein Flanschelement 10 zur Anbindung an eine externe Rohrleitung 3 verbunden. Zudem ist ein als Schutzschild 11 ausgestaltetes Anströmelement 8 vorhanden, das sowohl den Strömungsteiler 9b als auch das Flanschelement 10 bedeckt. Zudem weist auch das Anströmelement 8 einen Schutzschildflansch 12 auf, der auf der Verbindungsfläche 13 des Flanschelementes 10 aufliegt. Fig. 4b zeigt die Kombination aus dem Einlaufelement 7 mit dem Strömungsteiler 9b und dem als Anströmelement 8 ausgestalteten Schutzschild 11 in Explosionsdarstellung.

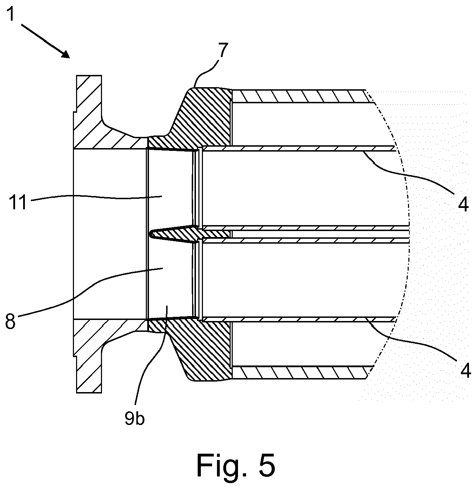

Fig. 5 zeigt in Schnittdarstellung den Endbereich eines fünftes Ausführungsbeispiel eines Durchflussmessgeräts 1 in Form eines Coriolis-Massedurchflussmessgeräts 1, das zwei Messrohre 4, ein Einlaufelement 7, das mit den Messrohren 4 verbunden ist und einen Strömungsteiler 9b aufweist. Auf dem Strömungsteiler 9b ist ein als austauschbares Anströmelement 8 ausgestalteter Schutzschild 11 angeordnet, der im Unterschied zu dem in den Fig. 4a und 4b dargestellten Ausführungsbeispiel lediglich den Strömungsteiler 9b bedeckt. Die Ausgestaltung zeigt, dass sofern das Anströmelement 8 als Schutzschild 11 ausgestaltet ist, das Anströmelement 8 besonders flexibel ausgestaltet werden kann.

### Bezugszeichen

- 1: Durchflussmessgerät
- 2: Übergangselement
- 3: externe Rohrleitung
- 4: Messrohr
- 5: Schwingungserzeuger
- 6: Schwingungsaufnehmer
- 7: Einlaufelement
- 8: Anströmelement
- 9a: Strömungsquerschnittsreduzierer
- 9b: Strömungsteiler
- 10: Flanschelement
- 11: Schutzschild
- 12: Schutzschildflansch
- 13: Verbindungsfläche

## Patentansprüche

1. Durchflussmessgerät (1) mit wenigstens einem Messrohr (4) und mit wenigstens einem Einlaufelement (7), wobei das Einlaufelement (7) mit dem wenigstens einen Messrohr (4) verbunden ist und in Strömungsrichtung vor dem wenigstens einen Messrohr (4) angeordnet ist,
**dadurch gekennzeichnet,**
**dass** wenigstens ein Anströmelement (8) vorhanden ist, wobei das Anströmelement (8) zumindest teilweise innerhalb des Einlaufelements (7) angeordnet ist und wobei das Anströmelement (8) lösbar mit dem Einlaufelement (7) verbunden ist.

2. Durchflussmessgerät (1) nach Anspruch 1, **dadurch gekennzeichnet, dass** das Durchflussmessgerät (1) ein Coriolis-Massedurchflussmessgerät mit wenigstens einem Schwingungserzeuger (5) und mit wenigstens zwei Schwingungsaufnehmern (6) ist.

3. Durchflussmessgerät (1) nach Anspruch 1 oder 2, **dadurch gekennzeichnet, dass** das Anströmelement (8) mittels einer kraft- oder formschlüssigen Verbindung mit dem Einlaufelement (7) verbunden ist.

4. Durchflussmessgerät (1) nach einem der Ansprüche 1 bis 3, **dadurch gekennzeichnet, dass** das Anströmelement (1) mittels Schrauben oder Klemmen oder einer Klebeverbindung mit dem Einlaufelement (7) verbunden ist.

5. Durchflussmessgerät (1) nach einem der Ansprüche 1 bis 4, **dadurch gekennzeichnet, dass** das Anströmelement (8) zumindest teilweise aus einem Metall oder einem Polymer besteht.

6. Durchflussmessgerät (1) nach einem der Ansprüche 1 bis 5, **dadurch gekennzeichnet, dass** ein Flanschelement (10) zur Anbindung an eine externe Rohrleitung vorhanden ist, und dass das Anströmelement (8) zumindest teilweise innerhalb des Flanschelements (10) angeordnet ist.

7. Durchflussmessgerät (1) nach einem der Ansprüche 1 bis 6, **dadurch gekennzeichnet, dass** ein Flanschelement (10) zur Anbindung an eine externe Rohrleitung vorhanden ist, und dass das Anströmelement zwischen dem Flanschelement (10) und dem wenigstens einen Messrohr (4) angeordnet ist.

8. Durchflussmessgerät (1) nach einem der Ansprüche 1 bis 7, **dadurch gekennzeichnet, dass** das Anströmelement (8) als Strömungsquerschnittsreduzierer (9a) ausgestaltet ist.

9. Durchflussmessgerät (1) nach einem der Ansprüche 1 bis 7, **dadurch gekennzeichnet, dass** ein Strömungsquerschnittsreduzierer (9a) innerhalb des Einlaufelements (7) angeordnet ist, und dass das Anströmelement (8) als Schutzschild (11) auf dem Strömungsquerschnittsreduzierer (9a) angeordnet ist.

10. Durchflussmessgerät (1) nach einem der Ansprüche 1 bis 7, **dadurch gekennzeichnet, dass** wenigstens zwei Messrohre (4) vorhanden sind, und dass das Anströmelement (8) als Strömungsteiler (9b), der vorzugsweise innerhalb des Einlaufelements (7) in Strömungsrichtung vor den Messrohren (4) angeordnet ist, ausgestaltet ist.

11. Durchflussmessgerät (1) nach einem der Ansprüche 1 bis 7, **dadurch gekennzeichnet, dass** wenigstens zwei Messrohre (4) und ein Strömungsteiler (9b) vorhanden sind, wobei der Strömungsteiler (9b) vorzugsweise in Strömungsrichtung vor den wenigstens zwei Messrohren (4) innerhalb des Einlaufelements (7) angeordnet ist und dass das Anströmelement (8) als Schutzschild (11) auf dem Strömungsteiler (9b) angeordnet ist.

12. Durchflussmessgerät (1) nach Anspruch 9 oder 11, **dadurch gekennzeichnet, dass** ein Flanschelement (10) zur Anbindung an eine externe Rohrleitung (3) vorhanden ist, dass der Schutzschild (11) zumindest teilweise innerhalb des Flanschelementes (10) angeordnet ist und dass der Schutzschild (11) einen Schutzschildflansch (12) aufweist.

13. Durchflussmessgerät (1) nach einem der Ansprüche 9, 11 oder 12, **dadurch gekennzeichnet, dass** der Schutzschild (11) die Form eines Strömungsteilers (9b) oder eines Strömungsquerschnittsreduzierers (9a) aufweist.
